# EUROPEAN PATENT SPECIFICATION

(11) **EP 1 838 406 B1**
(45) Date of publication and mention of the grant of the patent: **05.11.2014**
(21) Application number: 04755958.8
(22) Date of filing: 24.06.2004
(51) Int. Cl.: B01D 27/06, B01D 46/00, B01D 46/04, B01D 46/24, B01D 46/44, B01D 46/52

(54) **PLEATED AIR FILTER WITH REVERSE PULSATING AIR FLOW CLEANING**
GEFALTETER LUFTFILTER MIT UMKEHRIMPULSLUFTSTROMREINIGUNG
FILTRE A AIR PLISSE A NETTOYAGE PAR FLUX D'AIR PULSE INVERSE

(43) Date of publication of application: 03.10.2007
(60) Divisional application: 14176009.0
(73) Proprietor: Camfil Farr, Inc., Jonesboro AR 72401 (US)
(72) Inventor: MORGAN, Lee P., Jonesboro, Arkansas 72401 (US); LARSON, Jan Eric, Sodermanland (SE)
(74) Representative: Zimmermann & Partner
(86) International application number: PCT/US2004/020133
(87) International publication number: WO 2006/011862

(56) References cited:
- EP-A1- 0 796 645
- WO-A-02/47789
- WO-A1-99/28012
- DE-A1- 4 128 062
- US-A- 3 871 851
- US-A- 3 950 256
- US-A- 3 973 935
- US-A- 4 209 310
- US-A- 4 388 087
- US-A- 4 491 458
- US-A- 4 500 326
- US-A- 4 619 675
- US-A- 4 786 293
- US-A- 5 071 555
- US-A- 5 110 331
- US-A- 5 391 218
- US-A- 6 161 250

## Description

### 1. Field of the invention

This invention relates to a pleated cartridge air filter in which the pleats are separated from each other by means of beads and which includes a reverse pulse cleaner for automatically cleaning the cartridge.

### 2. Description of the Related Art.

Air filter units have been developed in the prior art, such as described in patent no. 5,512,086 issued April 3, 1996 to Glucksman, which employ pleated filter elements. The use of pleats has a distinct advantage in that it affords considerably greater filtering area. It has been found, however, that the pleats tend to bend together towards each other and thus lose their effectiveness. To obviate this problem, separator elements have been employed to keep the pleated elements separated from each other. As mentioned in Glucksman, this can take the form of a glue or other such material placed between the pleats which when it hardens forms separating beads. Such a device is described in patent no. 5,071,555 issued on December 10, 1991 to Enborn. It is to be noted that in Enbom, the filter is linear and not in the form of a container such as a cylinder. It is to be noted that in Glucksman, the cartridge is the form of a half sphere and is not in the form of a container having continuous side walls.

For example, reference US 5,110,331 A describes a dust collector, which includes a housing having a generally cylindrical chamber, and an inlet for introducing the transport fluid, with entrained particles therein, into the chamber in a direction that causes the transport fluid to travel in a generally helical path along the interior surface of the chamber and in a direction toward a portion of the housing at which the removed dust particles are collected and/or discharged from the housing. Filter means extend within the chamber to permit the transport fluid to flow inwardly through the exterior surface of the filter means and cause the entrained particles to be removed from the transport fluid and collected on such exterior surface. The filter elements are cylindrically-shaped pleated paper filtering cartridges. A cleaning system includes a reservoir tank that is mounted at the center of the partition plate to extend vertically with respect thereto, and a compressed air inlet conduit extends from the exterior of the housing to the reservoir tank. The filter cleaning system is designed to clean the filter elements when the pressure drop reaches a predetermined level.

As another example US 5,071,555 A describes an air filter, in particular absolute filter for supplying an even flow directed at work stations to keep the air clean there comprising a filter material. This material is provided a pattern of glue lines so that on a subsequent folding to zick-zack shape a wedge like cross section is obtained by double glue lines at the wide end of the wedges and single glue line in the vicinity of the apex of the wedges. Furthermore the filter is provided with a fine mesh air penetratable sheet material on the outlet side.

As yet another example, US 3,871,851 A describes a high grade particular filter pack having sizable effective filtering surfaces on a relatively small base for purification of gas produced by forming the filter surface as a zig-zag shaped web, continuous spacer strips or ridges formed for example of a plastics material, being stuck onto the web, the material of the spacer strips or ridges being cured so that the filter pack assumes a good rigidity.

As another example, WO 99/28012 describes a filter element, especially with a rectangular parallelepiped or hollow cylindrical outer shape, comprising a number of flat folding partitions respectively arranged in a continuous fold between folding edges, whereby said partitions are made of a liquid permeable filter material and spacers are provided at least in one section between at least every second pair of adjacent partition walls to connect said partition walls and support them against each other. The spacers are not made of the filter material. A hollow- cylindrical outer shape causes the alternating succession of wide pleats and narrow pleats of filter fleece. An arrangement of spacers in wide pleats is provided at the outside.

Document US 4,500,326 A describes a method of sequentially cleaning filter elements housed in a plurality of filter chambers collectively forming a fabric filter collection apparatus wherein the cleaning operation is controlled in response to an upper limit of pressure differential across the dust collection apparatus. Whenever the pressure differential across the dust collection apparatus reaches the upper limit value, one of the chambers is isolated, the filter elements housed therein are cleaned, and then the isolated chamber is returned to service.

A problem which prior art devices have is the necessity to rather frequently replace the filter cartridges particularly where the surrounding air has considerable dirt to be filtered out. This not only involves the costs involved in installing new filters but also the possibility of not replacing the filter in time which results in dirty air being fed to the area where clean air is requires. The device of the present invention solves this problem by providing automatic cleaning of the filter in response to a measurement indicating that the filter is overfilled with dirt.

According to one embodiment, an air filter assembly is provided. The air filter assembly includes a pleated filter cartridge in the form of a container having an open top and a side portion fabricated of an air filter material running around the entire side of said cartridge, said side portion having pleats formed therein, the side portion of the pleated filter cartridge having an inner and an outer wall, and beads separating said pleats from each other; a blower for drawing air through said pleated filter cartridge from the outer walls of said side portion, said side portion filtering said air, said blower further drawing said filtered air out of said pleated filter cartridge; and means for driving pulsating pressurized air into said pleated filter cartridge and out through said side portion thereby driving dirt from the outer walls of said pleated filter cartridge side portion, wherein the beads are hot melt glue beads, which are applied to only one side of the air filter material such that they do not go all the way down in the pleats and only fill about 3/4 of the depth of the pleats from the inner wall and are provided at said inner wall, wherein the hot melt beads adhere to each other back to back, whereupon cooling and hardening the hot melt glue beads maintain the pleats in optimum filtering condition during filtering operation and automatic reverse pulse cleaning thereof.

According to another embodiment, a method for automatically cleaning dust from a pleated filter cartridge of an air filter is provided, wherein the filter element has the form of a container having an open top and a side portion fabricated of an air filter material running around the entire side of said cartridge, said side portion having pleats formed therein, the side portion of the pleated filter cartridge having an inner and an outer wall surrounding a hollow central portion, and beads separating said pleats from each other, wherein the beads are hot melt glue beads, which are applied to only one side of the air filter material such that they do not go all the way down in the pleat and only fill about 3/4 of the depth of the pleat from the inner wall and are provided at said inner wall, wherein the hot melt beads adhere to each other back to back, whereupon cooling and hardening the hot melt glue beads maintain the pleats in optimum filtering condition during filtering operation and automatic reverse pulse cleaning thereof. The method includes providing a source of compressed air; and feeding said compressed air in a pulsating manner into the central portion of said filter cartridge; the compressed air passing through the filter outer wall portion to drive dust therefrom.

The device of embodiments of the invention employs a filter cartridge in the form of a container having a closed bottom, an open top and sides which run completely therearound, which may be cylindrical in shape. The sides of the container are formed from a pleated paper material which may be of a polyester, cellulose, or polyester/cellulose blend material. The pleats are kept separated from each other by glue beads which are installed with smelted glue which subsequently hardens. Filtering action is achieved by means of a blower which draws air upwardly out of die cartridge and in so doing draws air from the outside of the cartridge through the pleated filter element Dirt is removed by the filter element from the air and the clean air is fed to the area where such clean air is required.

The filter is automatically cleaned as controlled by a timer in response to a pressure differential measurement indicating that the filter has over accumulated dirt and its effectiveness has substantially decreased. When a signal is received by the timer, showing a predetermined overly high pressure differential between the atmosphere and the interior of the filter, which indicates a high dirt accumulation, compressed air is fed in pulses at a predetermined pulsing rate from an air compressor into the interior of the cartridge. As controlled in response to the timer this pulsating air flow drives the dirt from the outer walls of the cartridge. When the filter is adequately cleaned, as indicated by a decrease in the pressure differential between the inside and outside of the filter, the cleaning action is terminated

It is therefore an object of this invention to provide automatic cleaning of an air filter employing pleated filter elements;

It is a further object of this invention to assure optimum filtering action of an air filter by maintaining the filter's pleated elements in optimum filtering condition;

Other objects of the invention will become apparent in view of the following description taken in connection with the accompanying drawings
FIG 1 is drawing of a prior art filter in which the pleated elements are not separated;
FIG 2 is a schematic illustration showing the operation of the filter unit of the device of the invention;
FIG 2A is a top plan view of the filter cartridge of FIG 2;
FIG 2B is bottom plan view of the filter cartridge of FIG 2;
FIG 3 is a schematic illustration showing the reverse pulse cleaning operation of the device of the invention;
   and
FIG 4 is a cutaway section showing the pleated cartridge of the device of the invention.

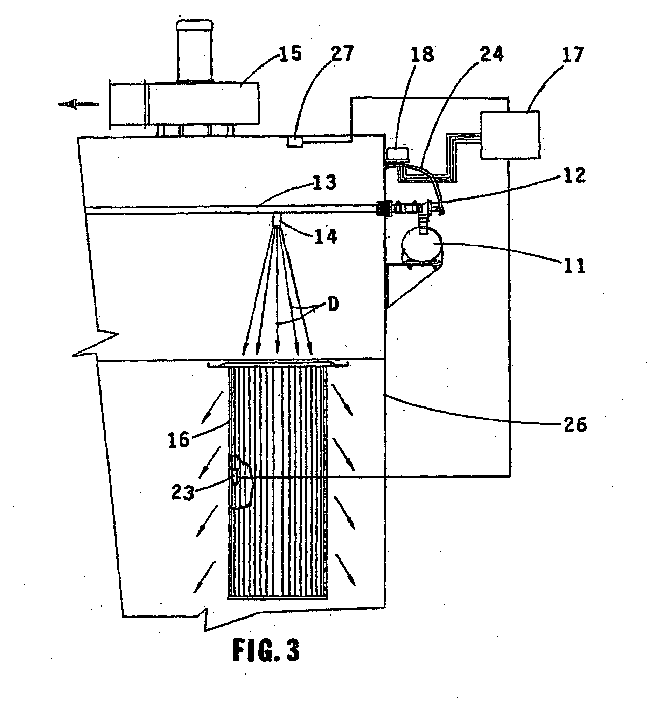

Referring to FIG 3, a pleated filter cartridge 20 of the prior art in which the pleats 21 have not been separated from each other is illustrated. Without such separation, adjoining pleats come together and the substantially greater surface area achieved with the pleats separated is not attained.

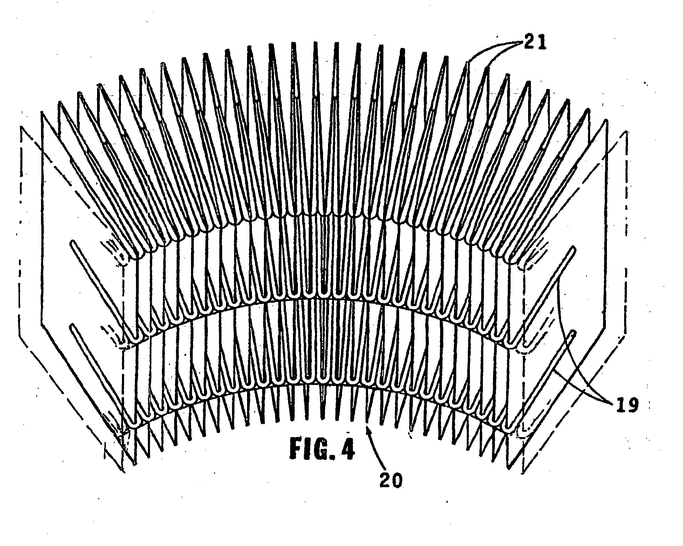

Referring now to FIG 4, the pleats 21 in the cartridge 20 of the present invention are illustrated. The pleats 21 are separated from each other by hot melt glue beads 19. In forming the pleated cartridge, the paper media is formed into a strip drawn through rolls which Grease the media to prepare it to be folded into pleats 21. Before the strip is folded, the hot melt glue beads 19 are applied to one side of the strip in a manner so that they do not go all the way down in the pleat and only fill about ¾ of the depth of the pleat from the inside out. This way the outer tips of the pleats can fold into crisp tips. The beads run along the length of the strip and are spaced about one inch apart. The strip is then folded to form the pleated configuration with the hot melt beads adhering to each other back to back and final cooling and hardening. The pleated strip is thus formed with the pleat sections separated from each other. The strip can then be wound into a cylindrical or other desired form.

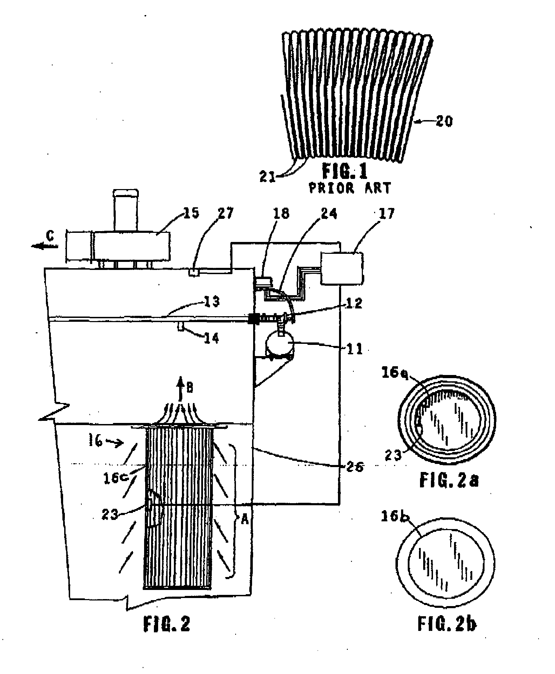

Referring now to FIG 2, the filtering operation of the device of the invention is illustrated. The filtering units are contained within housing 26 The filter cartridge 16 is cylindrical in form and has an open top 16a a closed bottom 16b and a side wall 16c in the form of a container. While in the preferred embodiment, the cartridge is cylindrical in form, it can take other shapes as long as the side wall 16c is continuous running all the way around the central cavity formed within the wall As shown in FIG 4, the surface of the side wall 16c has pleats 21 formed thereon.

Air is drawn by blower 15 into the interior of the filter cartridge 16 through the pleated outside surface thereof as indicated by arrow "A" and drawn upwardly out of the cartridge as indicated by arrow "B.'' Any dust in the air is trapped in the outside walls of the filter. The airflow is generated by blower 15, and the filtered air flows out from the blower to the area where it is required, as indicated by arrow "C."

Referring now to FIG 3, the automatic reverse pulse cleaning of the filter is illustrated. The filter cartridge 16 is contained within housing 26. Compressed air is stored in reservoir 11. A diaphragm valve 12 is connected to the output of the reservoir and when actuated by solenoid valves 18 feeds the stored compressed air into a blow pipe 13 that has a nozzle 14 positioned directly above the filter cartridge 16. The compressed air exits the nozzle at near sonic speed and is fed in short pulses or bursts in the nature of shock waves into the interior of the filter cartridge, as indicated by arrows "D."

An automatic timer 17 is connected to solenoid valves 18 to control both the initiation and termination of the feeding of the bursts of air and the rate at which such bursts occur. The valves 18 have an air output which is fed in tube 24 to diaphragm valve 12. When the solenoid is actuated in response to the timer control, air is fed through tube 24 from the solenoid valves, at about atmospheric pressure, to the diaphragm valve and opens the valve by virtue of the pressure differential with the compressed air in the reservoir. The timer is programmed to set the rate of the pulsations of the compressed gas, which typically is between two and twelve pulses per minute. The timer is set to respond to a predetermined high pressure differential between the inner and outer walls of the filter indicating that the filter requires cleaning. The differential pressure across the filter is measured by timer control 17 which receives pressure measurements from pressure sensor 23 which measures the pressure within the filter cartridge and pressure sensor 27 which measures the pressure on the outside of the cartridge. When the differential pressure across the filter reaches the "high" point set into the timer control, the control will actuate the solenoid valves to begin a cleaning sequence until a "low" differential point set in the timer control is reached. The timer control then will end the cleaning cycle until the high set point is again reached and the cleaning cycle will again be initiated. In this manner, the filter is automatically kept clean.

While the invention has been described and illustrated in detail, this is intended by way of illustration and example only and is not to be taken by way of limitation, the scope of the invention being limited by the terms of the following claims.

## Claims

1. An air filter assembly comprising:
a pleated filter cartridge (16) in the form of a container having an open top (16a) and a side portion (16c) fabricated of an air filter material running around the entire side of said cartridge, said side portion having pleats (21) formed therein, the side portion of the pleated filter cartridge (16) having an inner and an outer wall, and beads separating said pleats from each other;
a blower (15) for drawing air through said pleated filter cartridge from the outer walls of said side portion, said side portion (16c) filtering said air, said blower further drawing said filtered air out of said pleated filter cartridge; and
means for driving pulsating pressurized air into said pleated filter cartridge and out through said side portion thereby driving dirt from the outer walls of said pleated filter cartridge side portion,
wherein the beads are hot melt glue beads (19), which are applied to only one side of the air filter material such that they do not go all the way down in the pleats (21) and only fill about 3/4 of the depth of the pleats from the inner wall and are provided at said inner wall, wherein the hot melt beads adhere to each other back to back, whereupon cooling and hardening the hot melt glue beads maintain the pleats (21) in optimum filtering condition during filtering operation and automatic reverse pulse cleaning thereof.

2. The air filter assembly of claim 1 wherein said means for driving air into said pleated filter cartridge and out through the side portion thereof comprises a source of compressed air and a valve connected to said compressed air source for releasing said compressed air into said pleated filter cartridge.

3. The air filter assembly of claim 2 wherein said means for driving air into said pleated filter cartridge and out through the side portion thereof additionally comprises a timer control for opening and closing said valve at a predetermined rate.

4. The air filter assembly of claim 3 wherein said means for driving said air into said pleated filter cartridge and out through the side portion thereof comprises a sensor (23, 27) for sensing a predetermined drop in the pressure of the air entering the pleated filter cartridge (16), said sensor operating said timer control in response to the sensing of said predetermined pressure drop.

5. The air filter assembly of claim 1 wherein said pleated filter cartridge (16) is cylindrical in shape.

6. The air filter assembly of Claim 1, wherein the pulsating pressurized air exits from a nozzle (14) at near sonic speed and are fed in short pulses or bursts to form shock waves into the interior of the pleated filter (16).

7. The air filter assembly of claim 3, wherein said automatic timer is set to change the pulsing rate at which the compressed air is fed.

8. The air filter of claim 7 and further including pressure sensors for sensing the pressure differential between the inside and outside walls of said pleated filter cartridge, the outputs of said pressure sensors being fed to said automatic timer, said automatic timer being programmed to initiate the pulsed feeding of said compressed air when said pressure differential reaches a predetermined value and to terminate said pulsed feeding when said pressure differential falls below a predetermined value.

9. A method for automatically cleaning dust from a pleated filter cartridge (16) of an air filter, wherein the filter element has the form of a container having an open top (16a) and a side portion (16c) fabricated of an air filter material running around the entire side of said cartridge, said side portion having pleats (21) formed therein, the side portion of the pleated filter cartridge (16) having an inner and an outer wall surrounding a hollow central portion, and beads separating said pleats from each other, wherein the beads are hot melt glue beads (19), which are applied to only one side of the air filter material such that they do not go all the way down in the pleat and only fill about 3/4 of the depth of the pleat from the inner wall and are provided at said inner wall, wherein the hot melt beads adhere to each other back to back, whereupon cooling and hardening the hot melt glue beads maintain the pleats (21) in optimum filtering condition during filtering operation and automatic reverse pulse cleaning thereof. comprising the steps of:
providing a source of compressed air; and
feeding said compressed air in a pulsating manner into the central portion of said filter cartridge;
the compressed air passing through the filter outer wall portion to drive dust therefrom.

10. The method of claim 6 wherein the pulsating feeding of said compressed air into the central portion of said filter is done in response to a programmed timer.

11. The method of Claim 9, wherein controlled pulses of air exit from nozzle (14) at near sonic speed and are fed in short pulses or bursts as shock waves into the inner wall of the pleated filter cartridge (16).

## Patentansprüche

1. Luftfiltereinheit, Folgendes umfassend:
eine Faltenfilterkartusche (16) in Form eines Behälters mit einer offenen Oberseite (16a) und einem Seitenabschnitt (16c), der aus einem Luftfiltermaterial gefertigt ist, das um die gesamte Seite der Kartusche verläuft, wobei der Seitenabschnitt darin ausgebildete Falten (21) besitzt, wobei der Seitenabschnitt der Faltenfilterkartusche (16) eine Innenwand und eine Außenwand besitzt, und Raupen die Falten voneinander trennen;
ein Gebläse (15), um Luft von den Außenwänden des Seitenabschnitts durch die Faltenfilterkartusche zu ziehen, wobei der Seitenabschnitt (16c) die Luft filtert, wobei das Gebläse darüber hinaus die gefilterte Luft aus der Faltenfilterkartusche abzieht; und
eine Einrichtung, um pulsierende Druckluft in die Faltenfilterkartusche hinein und durch den Seitenabschnitt hinaus zu befördern, wodurch Schmutz von den Außenwänden des Seitenabschnitts der Faltenfilterkartusche wegbefördert wird,
wobei es sich bei den Raupen um Heißkleberraupen (19) handelt, die nur auf eine Seite des Luftfiltermaterials so aufgetragen sind, dass sie in den Falten (21) nicht ganz bis nach unten gehen und nur ca. % der Tiefe der Falten ausgehend von der Innenwand füllen und an der Innenwand vorgesehen sind, wobei die Heißkleberraupen Rücken an Rücken aneinander haften, woraufhin ein Abkühlen und Härten der Heißkleberraupen die Falten (21) während eines Filtervorgangs und einer automatischen Rückimpulsreinigung von diesen in einem optimalen Filterzustand halten.

2. Luftfiltereinheit nach Anspruch 1, wobei die Einrichtung, um Luft in die Faltenfilterkartusche hinein und durch den Seitenabschnitt von dieser hinaus zu befördern, eine Druckluftquelle und ein Ventil umfasst, das an die Druckluftquelle angeschlossen ist, um die Druckluft in die Faltenfilterkartusche freizusetzen.

3. Luftfiltereinheit nach Anspruch 2, wobei die Einrichtung, um Luft in die Faltenfilterkartusche hinein und durch den Seitenabschnitt von dieser hinaus zu befördern, zusätzlich eine Zeitgebersteuerung umfasst, um das Ventil in einem vorbestimmten Rhythmus zu öffnen und zu schließen.

4. Luftfiltereinheit nach Anspruch 3, wobei die Einrichtung, um die Luft in die Faltenfilterkartusche hinein und durch den Seitenabschnitt von dieser hinaus zu befördern, einen Sensor (23, 27) umfasst, um einen vorbestimmten Abfall beim Druck der in die Faltenfilterkartusche (16) eintretenden Luft abzufühlen, wobei der Sensor die Zeitgebersteuerung im Ansprechen auf das Abfühlen des vorbestimmten Druckabfalls betätigt.

5. Luftfiltereinheit nach Anspruch 1, wobei die Faltenfilterkartusche (16) von der Form her zylindrisch ist.

6. Luftfiltereinheit nach Anspruch 1, wobei die pulsierende Druckluft aus einer Düse (14) mit nahezu Schallgeschwindigkeit austritt und in kurzen Impulsen oder Salven eingeleitet wird, um in das Innere des Faltenfilters (16) vordringende Stoßwellen zu bilden.

7. Luftfiltereinheit nach Anspruch 3, wobei der automatische Zeitgeber dazu eingestellt ist, die Pulsierungsrate zu verändern, mit der die Druckluft zugeführt wird.

8. Luftfiltereinheit nach Anspruch 7 und darüber hinaus Drucksensoren umfassend, um das Druckdifferential zwischen der innenliegenden und der außenliegenden Wand der Faltenfilterkartusche abzufühlen, wobei die Ausgänge der Drucksensoren dem automatischen Zeitgeber zugeführt werden, wobei der automatische Zeitgeber dazu programmiert ist, das gepulste Zuführen der Druckluft einzuleiten, wenn das Druckdifferential einen vorbestimmten Wert erreicht, und das gepulste Zuführen zu beenden, wenn das Druckdifferential unter einen vorbestimmten Wert sinkt.

9. Verfahren zum automatischen Reinigen einer Faltenfilterkartusche (16) eines Luftfilters von Staub, wobei das Filterelement die Form eines Behälters mit einer offenen Oberseite (16a) und einem Seitenabschnitt (16c) hat, der aus einem Luftfiltermaterial gefertigt ist, das um die gesamte Seite der Kartusche verläuft, wobei der Seitenabschnitt darin ausgebildete Falten (21) besitzt, wobei der Seitenabschnitt der Faltenfilterkartusche (16) eine Innenwand und eine Außenwand besitzt, die einen hohlen mittleren Abschnitt umgeben, und Raupen die Falten voneinander trennen, wobei es sich bei den Raupen um Heißkleberraupen (19) handelt, die nur auf eine Seite des Luftfiltermaterials so aufgetragen sind, dass sie in den Falten (21) nicht ganz bis nach unten gehen und nur ca. % der Tiefe der Falten ausgehend von der Innenwand füllen und an der Innenwand vorgesehen sind, wobei die Heißkleberraupen Rücken an Rücken aneinander haften, woraufhin ein Abkühlen und Härten der Heißkleberraupen die Falten (21) während eines Filtervorgangs und einer automatischen Rückimpulsreinigung von diesen in einem optimalen Filterzustand halten, folgende Schritte umfassend:
Bereitstellen einer Druckluftquelle; und
Zuführen der Druckluft auf eine pulsierende Weise in den mittleren Abschnitt der Filterkartusche;
wobei die Druckluft durch den Filteraußenwandabschnitt hindurchtritt, um Staub davon wegzubefördern.

10. Verfahren nach Anspruch 9, wobei das pulsierende Zuführen der Druckluft in den mittleren Abschnitt des Filters im Ansprechen auf einen programmierten Zeitgeber erfolgt.

11. Verfahren nach Anspruch 9, wobei gesteuerte Luftimpulse aus einer Düse (14) mit nahezu Schallgeschwindigkeit austreten und in kurzen Impulsen oder Salven als Stoßwellen in die Innenwand der Faltenfilterkartusche (16) vordringend zugeführt werden.

## Revendications

1. Ensemble de filtre à air comprenant :
une cartouche de filtre a plis (16) sous la forme d'un réceptacle présentant une partie supérieure ouverte (16a) et une partie latérale (16c) fabriquée à partir d'un matériau de filtre à air entourant tout le côté de ladite cartouche, ladite partie latérale présentant des plis (21) formés dans celle-ci, la partie latérale de la cartouche de filtre a plis (16) présentant une paroi intérieure et une paroi extérieure, et des cordons séparant lesdits plis les uns des autres ;
une soufflerie (15) destinée à attirer de l'air à travers ladite cartouche de filtre a plis depuis les parois extérieures de ladite partie latérale, ladite partie latérale (16c) filtrant ledit air, ladite soufflerie attirant en outre ledit air filtré hors de la cartouche de filtre a plis ; et
des moyens destinés à faire entrer de l'air pressurisé pulsant dans ladite cartouche de filtre a plis et à le faire sortir via ladite partie latérale, chassant ainsi la saleté des parois extérieures de ladite partie latérale de cartouche de filtre a plis,
sachant que les cordons sont des cordons de colle thermofusibles (19), lesquels sont appliqués sur un seul côté du matériau de filtre à air de telle façon qu'ils n'aillent pas jusqu'en bas dans les plis (21) et remplissent seulement environ 3/4 de la profondeur des plis à partir de la paroi intérieure et sont disposés sur ladite paroi intérieure, sachant que les cordons thermofusibles adhèrent les uns aux autres dos à dos, le refroidissement et le durcissement des cordons de colle thermofusibles maintenant les plis (21) en état de filtration optimale pendant le processus de filtration et le nettoyage pulsé inverse automatique de ceux-ci.

2. L'ensemble de filtre à air de la revendication 1, dans lequel lesdits moyens destinés à faire entrer de l'air dans ladite cartouche de filtre a plis et à le faire sortir via ladite partie latérale de celle-ci comprennent une source d'air comprimé et une vanne connectée à ladite source d'air comprimé pour libérer ledit air comprimé dans ladite cartouche de filtre a plis.

3. L'ensemble de filtre à air de la revendication 2, dans lequel lesdits moyens destinés à faire entrer de l'air dans ladite cartouche de filtre a plis et à le faire sortir via ladite partie latérale de celle-ci comprennent en outre une commande par minuterie pour l'ouverture et la fermeture de ladite vanne à une cadence prédéterminée.

4. L'ensemble de filtre à air de la revendication 3, dans lequel lesdits moyens destinés à faire entrer ledit air dans ladite cartouche de filtre a plis et à le faire sortir via la partie latérale de celle-ci comprennent un détecteur (23, 27) destiné à détecter une baisse prédéterminée de la pression de l'air qui entre dans la cartouche de filtre a plis (16), ledit détecteur actionnant ladite commande par minuterie en réponse à la détection de ladite baisse de pression prédéterminée.

5. L'ensemble de filtre à air de la revendication 1, dans lequel ladite cartouche de filtre a plis (16) est de forme cylindrique.

6. L'ensemble de filtre à air de la revendication 1, dans lequel l'air pressurisé pulsant sort d'une tuyère (14) à une vitesse proche de la vitesse du son et est envoyé par courtes pulsations ou salves pour former des ondes de choc pénétrant à l'intérieur du filtre a plis (16).

7. L'ensemble de filtre à air de la revendication 3, dans lequel ladite minuterie automatique est réglée pour changer la cadence de pulsation à laquelle l'air comprimé est envoyé.

8. L'ensemble de filtre à air de la revendication 7, et comprenant en outre des détecteurs de pression destinés à détecter la différence de pression entre les parois intérieures et extérieures de ladite cartouche de filtre a plis, les sorties desdits détecteurs de pression étant envoyées à ladite minuterie automatique, ladite minuterie automatique étant programmée pour initier l'envoi pulsé dudit air comprimé lorsque ladite différence de pression atteint une valeur prédéterminée et pour mettre fin à l'envoi pulsé lorsque ladite différence de pression descend sous une valeur prédéterminée.

9. Procédé de nettoyage automatique de poussière provenant d'une cartouche de filtre a plis (16) d'un filtre à air, dans lequel l'élément de filtre a la forme d'un réceptacle présentant une partie supérieure ouverte (16a) et une partie latérale (16c) fabriquée à partir d'un matériau de filtre à air entourant tout le côté de ladite cartouche, ladite partie latérale présentant des plis (21) formés dans celle-ci, la partie latérale de la cartouche de filtre a plis (16) présentant une paroi intérieure et une paroi extérieure entourant une partie centrale creuse, et des cordons séparant lesdits plis les uns des autres, sachant que les cordons sont des cordons de colle thermofusibles (19), lesquels sont appliqués sur un seul côté du matériau de filtre à air de telle façon qu'ils n'aillent pas jusqu'en bas dans les plis et remplissent seulement environ 3/4 de la profondeur des plis à partir de la paroi intérieure et sont disposés sur ladite paroi intérieure, sachant que les cordons thermofusibles adhèrent les uns aux autres dos à dos, le refroidissement et le durcissement des cordons de colle thermofusibles maintenant les plis (21) en état de filtration optimale pendant le processus de filtration et le nettoyage pulsé inverse automatique de ceux-ci, comprenant les étapes de :
fourniture d'une source d'air comprimé ; et
envoi dudit air comprimé de manière pulsante dans la partie centrale de ladite cartouche de filtre ;
l'air comprimé traversant la partie de paroi extérieure de filtre pour en chasser la poussière.

10. Le procédé de la revendication 9, dans lequel l'envoi pulsant dudit air comprimé dans la partie centrale dudit filtre est effectué en réponse à une minuterie programmée.

11. Le procédé de la revendication 9, dans lequel des pulsations commandées d'air sortent d'une tuyère (14) à une vitesse proche de la vitesse du son et sont envoyées par courtes pulsations ou salves comme ondes de choc pénétrant à la paroi intérieure de la cartouche de filtre a plis (16).
